# EUROPEAN PATENT SPECIFICATION

(11) **EP 2 340 932 B1**
(45) Date of publication and mention of the grant of the patent: **22.05.2019**
(21) Application number: 09816261.3
(22) Date of filing: 17.09.2009
(51) Int. Cl.: B32B 15/04, B32B 3/30, C23F 11/00, B23K 11/16, B23K 103/04, B23K 11/34

(54) **RUST-PROOF STEEL SHEET AND METHOD FOR PRODUCING THE SAME**
ROSTFREIES STAHLBLECH UND VERFAHREN ZU SEINER HERSTELLUNG
TÔLE D'ACIER ANTI-ROUILLE ET SON PROCÉDÉ DE PRODUCTION

(30) Priority: 24.09.2008 JP 2008243513
(43) Date of publication of application: 06.07.2011
(73) Proprietor: JFE Steel Corporation, Tokyo 100-0011 (JP)
(72) Inventor: SUGIMOTO, Yoshiharu, Tokyo 100-0011 (JP); FUJITA, Sakae, Tokyo 100-0011 (JP)
(74) Representative: Grünecker Patent- und Rechtsanwälte PartG mbB
(86) International application number: PCT/JP2009/066834
(87) International publication number: WO 2010/035847

(56) References cited:
- EP-A1- 1 987 904
- JP-A- 8 120 461
- JP-A- 2009 274 341
- JP-U- 60 048 432
- Anonymous: "Spot welding", robot-welding , 12 November 2001 (2001-11-12), XP002690367, Retrieved from the Internet: URL:http://www.robot-welding.com/spot_weld ing.htm [retrieved on 2013-01-16]
- THOMAS W. EAGAR: "RESISTANCE SPOT WELDING OF GALVANIZED STEEL", METALLURGICAL TRANSACTIONS B, vol. 17B, 1 December 1986 (1986-12-01), pages 879-885, XP002690374,
- Miller Electric Mfg. Co.: "Handbook for Resistance Spot Welding", , 25 November 2005 (2005-11-25), XP002690373, Retrieved from the Internet: URL:http://web.archive.org/web/20051125085 043/http://www.millerwelds.com/pdf/Resista nce.pdf [retrieved on 2013-01-16]
- Anonymous: "SPOT WELDING TECHNICAL INFORMATION", TITE-SPOT BROCHURE , 3 June 2003 (2003-06-03), XP002690425, Retrieved from the Internet: URL:http://web.archive.org/web/20030603221 341/http://www.titespot.com/technical_info rmation.pdf [retrieved on 2013-01-16]

## Description

### Technical Field

The present invention relates to a method for manufacturing a rustproof steel sheet having an organic and/or inorganic coating layer that is excellent in spot weldability.

### Background Art

Rustproof performance of automobiles has become extremely important demand characteristics. In the past, the use of a snow-melting agent (salts) started in the 1970s to de-ice the road and the corrosion problem of automobiles came to the surface. In recent years, the life of automobiles has become long and the term when rusting needs to be suppressed also has become long.

In view of such circumstances, various rustproof steel sheets have been developed. At present, a method for improving corrosion resistance is broadly divided into a method for galvanizing a steel sheet and a method for coating a surface of a steel sheet with an organic film.

Since a steel sheet is formed into a complicated shape, assembled, and then transferred to a painting step in an automobile manufacturing process, there is a problem in that it is difficult to apply paint to the inside of a portion having a complicated shape. The above-described method for galvanizing a steel sheet poses a problem in that corrosion resistance is not sufficiently achieved at an inner portion where it is difficult to apply paint.

For example, Patent Document 1 provides the method for coating a surface of a steel sheet with an organic film. Patent Document 1 discloses a rustproof steel sheet on which a film composed of a paint containing zinc powder is formed with a thickness of 10 to 20 µm.

In addition, there are proposed a steel sheet including a chromate film on a Zn-Ni alloy coated steel sheet and an organic coating layer with a thickness of about 1 µm on the chromate film, and a steel sheet including a chromate film on a zinc coated steel sheet and an organic coating layer with a thickness of about 4 to 7 µm containing conductive metal powder such as zinc powder on the chromate film.

However, since the rustproof steel sheets disclosed in Patent Document 1 and the like contains zinc powder in the organic coating layer to impart spot weldability, spot welding can be achieved but the strength of the organic coating layer is decreased because of zinc powder dispersed in the organic coating layer. As a result, severe film detachment is caused in press forming, and the film is accumulated in a pressing die to cause press defects. The detached portion has lower corrosion resistance.
Furthermore, the rustproof steel sheet has spot weldability, but the weldability is still unsatisfactory. If the content of the metal powder is further increased to improve weldability, film detachment becomes more severe.

Patent document 2 discloses a rustproof steel sheet which has an organic coating layer on at least one side thereof to provide rust resistance.

Further, patent document 3 discloses a steel sheet having a coating layer on at least one side wherein the spot weldability is improved by making the thickness of the coating layer of the portion to be spot welded thinner than the thickness of the coating layer of the portion not to be spot welded.

Patent document 4 discloses a rustproof steel sheet having as a supression layer coated on the surface of the steel sheet, namely an organic resin. From the region where the steel sheet is spot welded, the depression layer is removed.

Patent Document 5 describes the technical background of spot welding. Moreover, according to patent document 5, from a galvanized steel sheet, the zinc coating must first be melted off before the steel sheet is joined via spot welding.

Patent document 6 describes a study of material variation and process modification which has been undertaken to determine the effects on the acceptable range of resistance spot welding conditions for galvanized steel sheets. According to patent document 6, parts of galvanized layers were removed by etching for various times before spot welding is applied in these regions.

Patent document 7 discloses a galvanized steel sheet where zinc is evaporized from the region where the steel sheet is spot welded while an adequate pressure is used during spot welding.

Patent document 8 discloses that for spot welding a galvanized steel sheet, namely a steel sheet containing a galvanized coating has to be pre-heated such that the galvanized layer is burnt to eliminate it from the welded zone before the spot welding takes place.

Because of the needs for cost reduction in automobile manufacturing, the cost reduction of surface preparations for painting such as chemical conversion treatment and E-coat has become increasingly important.

The automobile manufacturing process, after a steel sheet has been cut into a desired size, roughly includes blanking, pressing, assembly (welding), chemical conversion treatment (surface preparation for painting), E-coating, primer, and top coating. To reduce the cost of automobile manufacturing, for example, the thickness of a film can be reduced or some manufacturing steps can be omitted. Moreover, a rustproof steel sheet in which coating is performed on a sheet that has not yet been processed into parts (a material used by performing intermediate coating steps such as a primer step and a top coating step on a painted steel sheet without performing a final top coating step) can be used as one solution strategy.

As described above, when spot welding is performed on a steel sheet coated with an organic film, there are problems in that welding cannot be performed when the organic film is thick and sufficient corrosion resistance cannot be achieved when the organic film is thin. When an electroconductive material such as metal is added to the organic film to allow welding even if the organic film is thick, the film itself is detached due to processing, which causes press defects or a decrease in corrosion resistance.

### Related Art Document

### Patent Document

Patent Document 1: Japanese Examined Patent Application Publication No. 47-6882 ;
Patent Document 2: JP-8-120461 A;
Patent Document 3: Microfilm of the specification and drawings annexed to the request of Japanese Utility Model Application No. 139622/1983;
Patent Document 4: European patent application EP 1 987 904 A1 ;
Patent Document 5: URL:http://www.robot-welding.com/spot_welding.htm, November 12, 2011
Patent Document 6: Thomas W. Eagar: «Resistance spot welding of galvanized steel», Metallurgical Transactions B, vol. 17b, no. December, pages 879-885, December 1, 1986;
Patent Document 7: Miller Electric Mfg. Co.: "Handbook for Resistance Spot Welding", November 25, 2005;
Patent Document 8: "Spot welding technical information", June 3, 2003.

### Summary of the Invention

### Problems to be Solved by the Invention

As described above, when a steel sheet is coated with an organic film to improve corrosion resistance, the spot weldability is considerably reduced. When fine conductive particles are added to the organic film to achieve spot weldability, the film is detached due to processing. Furthermore, the corrosion resistance is decreased due to press defects or film detachment.

In view of the foregoing problems, an object of the present invention is to provide a rustproof steel sheet that is excellent in spot weldability and corrosion resistance and a method for manufacturing the rustproof steel sheet. Means for Solving the Problems

According to the present invention, there is provided a method for manufacturing a rustproof steel sheet as defined in claim 1.

Further preferred embodiments are described in the dependent claims.

### Advantages

According to the present invention, a rustproof steel sheet that is excellent in spot weldability and corrosion resistance is obtained by the inventive method. Consequently, steps of chemical conversion treatment and electrodeposition coating are omitted and the thickness of an electrodeposition coating layer is reduced.

### Mode for Carrying Out the Invention

The inventors of the present invention studied eagerly to solve the problems and obtained the following findings. The inventors studied about a rustproof steel sheet that has both spot weldability and corrosion resistance and satisfies practicality. As a result, they found that such desired characteristics can be imparted by controlling the thickness of an organic coating layer in a portion where spot welding is performed.

A rustproof steel sheet of the present invention will now be described in detail.

For example, a cold rolled steel sheet or a plated steel sheet obtained by galvanizing a cold rolled steel sheet can be used as a raw steel sheet of the rustproof steel sheet of the present invention.

In the present invention, at least one side of the raw steel sheet is coated with an organic and/or inorganic coating layer.

For example, the organic coating layer is obtained by applying an organic resin to a surface of a steel sheet. The organic resin applied to at least one side of a rustproof steel sheet is one or more of resins suitably selected from an epoxy resin, a modified epoxy resin, a polyhydroxy polyether resin, a polyalkylene glycol-modified epoxy resin, a urethane-modified epoxy resin, a resin obtained by further modifying these resins, a polyester resin, a urethane resin, a silicon resin, and an acrylic resin. In particular, a resin obtained by using an epoxy resin as a base in terms of corrosion resistance and optimizing the molecular weight to improve formability and a resin obtained by using an epoxy resin as a base and modifying part of the resin with urethane, polyester, amine, or the like are preferred, but the organic resin is not limited to these resins. Such an organic resin is normally used as a paint with various additive components (a lubricant and a conductivity imparting material) such as a rust inhibitor for improving rustproof performance, and these additive components are also not particularly limited.

Metal plating may be performed on the raw steel sheet to form a lower layer of the organic and/or inorganic coating layer. Examples of the metal plating include zinc plating, zinc alloy plating (e.g., Zn-Ni alloy plating, Zn-Fe alloy plating, Zn-Mn alloy plating, Zn-Mg alloy plating, Zn-Al-Mg alloy plating, and Zn-Al alloy plating), Al plating, and Al alloy plating, and the metal plating is not limited to these. Furthermore, the rustproof steel sheet of the present invention may be subjected to chromate treatment, chromate-free treatment, and/or phosphate treatment.

The coating layer on at least one side of the rustproof steel sheet may be an organic coating layer or an inorganic coating layer, and hereinafter the case where an organic resin is used is described as an example.

In the coating of the surface of a steel sheet with the organic resin, the thickness of a portion where spot welding is performed is brought to be smaller than that of a portion where spot welding is not performed. The thickness of the coating resulted in an entirely non-uniform. This is the most important requirement in the present invention. For the reason described below, spot weldability is improved by decreasing the thickness of the organic resin layer in a portion where spot welding is performed.

A portion where spot welding is performed is a portion welded in a step in which the rustproof steel sheet of the present invention is subjected to processing such as cutting, forming, or assembling by steel sheet users so as to be processed into parts of a car body or the like. Since a position where welding is to be performed on a steel sheet just before cutting can be predicted from the welded position of a final formed part, the thickness of the organic resin layer can be reduced when the steel sheet is coated with the organic resin, by obtaining the information about the cutting position in coil from steel sheet users in advance. Electrodes used in spot welding normally have a rod shape. The section of the tip is circular and the representative tip diameter is about 6 mm.

Spot welding is a technology in which an electric current is applied from electrodes to generate heat and a steel sheet is melted using the resultant heat to perform welding. Herein, when the thickness of the organic coating layer (film thickness of the organic resin) exceeds a certain thickness, the electric resistance caused by the coating layer becomes too large, which inhibits the application of an electric current. To achieve the application of an electric current, the welding current during spot welding needs to be increased. However, since the amount of generated heat is very large, the electrodes become considerably worn out, which significantly shortens the life of the electrodes. In addition, a phenomenon called expulsion appears in which melted metal is projected to the periphery and becomes attached to the steel sheet again. If such a steel sheet is used as an outer panel, the external appearance is impaired. Thus, in consideration of only the application of an electric current, most preferably, the portion where spot welding is performed is not coated with the organic coating layer or the thickness is controlled so as to allow welding using an appropriate amount of electric current without increasing welding current. Accordingly, the organic coating layer in the portion where spot welding is performed is thinned as much as possible, preferably thinned to a limitation thickness or less. The limitation thickness varies in accordance with welding conditions. When welding is performed in a normal range, weldability is significantly decreased when the thickness exceeds 2.5 µm. Thus, the thickness of the organic coating layer is preferably 2.5 µm or less, more preferably 1.5 µm or less.

As described above, the thickness of the organic coating layer in a portion where spot welding is performed is brought to be smaller than that in a portion where spot welding is not performed because this provides a sufficient amount of electric current that achieves welding on a steel sheet using the heat generated during spot welding. From this viewpoint, an area of the portion of the organic coating layer whose thickness is controlled was investigated, and it was found that, when the area is 25% or more of the contact area (called electrode surface area) of a portion where the electrode contacts the steel sheet in spot welding, a sufficient amount of electric current is applied during spot welding, which improves weldability. When the area is less than 25% of the electrode surface area in spot welding, the electric resistance caused by the coating layer does not decrease sufficiently and a satisfactory weld spot sometimes cannot be formed. Therefore, the area of a portion where spot welding is performed when the organic coating layer is thinned or the area of a portion where spot welding is performed when there is no organic coating layer is preferably 25% or more of the electrode surface area in spot welding. In consideration of corrosion resistance, the area of a portion where spot welding is performed when the organic coating layer is thinned or the area of a portion where spot welding is performed when there is no organic coating layer is desirably as small as possible. Thus, the electrode surface area is preferably 400% or less.

The position where spot welding is performed on a rustproof steel sheet is suitably determined in accordance with its use. Thus, when the thickness of a portion where spot welding is performed is controlled, the information about the spot welding needs to be obtained in advance from steel sheet users and the thickness of the organic coating layer in a portion where spot welding is performed needs to be controlled on the basis of the information.

### Example 1

Example of the present invention will now be described.

A plated steel sheet was used as a raw steel sheet of a rustproof steel sheet. Three types of plated steel sheets such as an alloyed hot dip galvanized steel sheet, a hot dip galvanized steel sheet, and an electrogalvanized steel sheet each having a coating weight of 40 to 45 g/m² per one side were used. An organic paint with epoxy resin was applied to the three types of plated steel sheets using three roll coaters. Coating with various film thicknesses was performed by a method in which the paint picked up using a pick-up roller was adjusted to a required amount (depending on the desirable thickness) using a metering roll and then applied to the steel sheets using an application roll. Regarding the thickness control of an organic coating layer in a portion where spot welding was to be performed, a depressed portion was provided on a surface of the application roll to be subjected to normal coating and a projected portion was provided on a surface of the application roll to be subjected to thinner coating. By controlling the difference between the depressed portion and the projected portion, the difference in thickness was controlled. The portion where thinner coating was to be performed under the assumption that spot welding was to be performed was coated with a resin using an application roll obtained by forming a projected portion having a diameter of 6 mm and a height of 0.2 to 1 mm thereon. When a portion where spot welding is performed is not coated, coating was performed using an application roll obtained by forming a depressed portion having a diameter of 6 mm and a depth of 5 mm.

Subsequently, two plated steel sheets of the same kind were attached to each other and spot welding was then performed to make a sample. Spot welding was performed using electrodes (tip diameter: 6φ-40K) having a dome shape at a welding pressure of 200 kg with a weld time of 12 cycles at 60 Hz.

For the obtained sample, the film thickness and area ratio of the portion where spot welding was performed and the portion (normal portion) other than the portion where spot welding was performed were measured and corrosion resistance and weldability were investigated by the method described below. The film thickness was measured using an electromagnetic thickness gauge and SEM observation of a film section. The area ratio was obtained by measuring the length at thinner portions through SEM observation of a film section.

### Corrosion Resistance

Evaluation was conducted on the basis of a red rust occurrence area ratio after 720 hours in a salt-spray test.

Good: the red rust occurrence area ratio is 5% or less.

Satisfactory: the red rust occurrence area ratio is more than 5% and 25% or less.

Unsatisfactory: the red rust occurrence area ratio is more than 25% and 75% or less.

Poor: the red rust occurrence area ratio is more than 75%.

### Spot Weldability

Evaluation was conducted on the basis of weld nugget diameter.

Good: a nugget is formed with a weld nugget diameter of 4(t)^{1/2} or more.

Unsatisfactory: a nugget is formed with a weld nugget diameter of less than 4(t)^{1/2}.

Poor: a nugget is not formed.

Herein, t is a sheet thickness (mm).

Table 1 shows the results together with the conditions.

**Table 1**

| Nos. | Film thickness (µm) | | Thinly coated area at welded portion/electrode surface area × 100 (%) | Plating type | Evaluation result for weldability | Evaluation result for corrosion resistance |
|---|---|---|---|---|---|---|
| | Normal portion | Welded portion | | | | |
| Co 1 | 5 | 5 | 75 | alloyed hot dip galvanizing (GA) | poor | - |
| Ex 1 | 5 | 3 | 75 | alloyed hot dip galvanizing (GA) | unsatisfactory | good |
| Ex 2 | 5 | 2.5 | 75 | alloyed hot dip galvanizing (GA) | good | good |
| Ex 3 | 5 | 1.5 | 75 | alloyed hot dip galvanizing (GA) | good | good |
| Ex 4 | 5 | 1 | 75 | alloyed hot dip galvanizing (GA) | good | good |
| Ex 5 | 5 | 0.5 | 75 | alloyed hot dip galvanizing (GA) | good | good |
| Ex 6 | 5 | 0 | 75 | alloyed hot dip galvanizing (GA) | good | good |
| Ex 7 | 5 | 1.5 | 10 | alloyed hot dip galvanizing (GA) | unsatisfactory | good |
| Ex 8 | 5 | 1.5 | 25 | alloyed hot dip galvanizing (GA) | good | good |
| Ex 9 | 5 | 1.5 | 50 | alloyed hot dip galvanizing (GA) | good | good |
| Ex 10 | 5 | 1.5 | 75 | alloyed hot dip galvanizing (GA) | good | good |
| Ex 11 | 5 | 1.5 | 100 | alloyed hot dip galvanizing (GA) | good | good |
| Ex 12 | 5 | 1.5 | 150 | alloyed hot dip galvanizing (GA) | good | good |
| Ex 13 | 5 | 1.5 | 200 | alloyed hot dip galvanizing (GA) | good | good |
| Ex 14 | 5 | 1.5 | 400 | alloyed hot dip galvanizing (GA) | good | good |
| Co 2 | 10 | 10 | 75 | alloyed hot dip galvanizing (GA) | poor | - |
| Ex 15 | 10 | 3 | 75 | alloyed hot dip galvanizing (GA) | unsatisfactory | good |
| Ex 16 | 10 | 2.5 | 75 | alloyed hot dip galvanizing (GA) | good | good |
| Ex 17 | 10 | 1.5 | 75 | alloyed hot dip galvanizing (GA) | good | good |
| Ex 18 | 10 | 1 | 75 | alloyed hot dip galvanizing (GA) | good | good |
| Ex 19 | 10 | 0.5 | 75 | alloyed hot dip galvanizing (GA) | good | good |
| Ex 20 | 10 | 0 | 75 | alloyed hot dip galvanizing (GA) | good | good |
| Ex 21 | 5 | 1.5 | 75 | no plating | good | satisfactory |
| Ex 22 | 5 | 1.5 | 75 | hot dip galvanizing (GI) | good | good |
| Ex 23 | 5 | 1.5 | 75 | electrogalvanizing (EG) | good | good |
| Ex 24 | 5 | 1.5 | 75 | electrogalvanizing (EG) (*1) | good | good |
| Co 3 | 0 | 0 | - | alloyed hot dip galvanizing (GA) | good | poor |
| Co 4 | 0 | 0 | - | hot dip galvanizing (GI) | good | poor |
| Co 5 | 0 | 0 | - | electrogalvanizing (EG) | good | poor |

| | | | | | | |
|---|---|---|---|---|---|---|
| * 1: A zinc phosphate film was formed on an electrogalvanized steel sheet and epoxy coating was then performed. Ex: Example, Co: Comparative Example | | | | | | |

It is clear from the above description that both weldability and corrosion resistance are good in Invention Examples. In contrast, at least one of weldability and corrosion resistance is poor in Comparative Examples.

### Industrial Applicability

The rustproof steel sheet of the present invention that is excellent in corrosion resistance and weldability is a material suitably used for, for example, automobile parts and a car body (including spare parts).

## Claims

1. A method for manufacturing a rustproof steel sheet comprising the steps of:
a) obtaining information about a position where spot welding is performed from a steel sheet user; and
b) applying an organic and/or inorganic coating layer on at least one side of the steel sheet to provide rustproofing, wherein the thickness of the coating layer in a portion of the steel sheet where spot welding is performed is smaller than that in a portion where spot welding is not performed by using an application roll, wherein the application roll has on the surface thereof a depressed portion and a projected portion wherein the difference in thickness of the coating layer is controlled by a difference in height between the depressed and the projected portion;
c) controlling the thickness of the organic and/or inorganic coating layer in the portion where spot welding is performed, on the basis of the information obtained in step a).

2. The method according to Claim 1, wherein the thickness of the coating layer in the portion where spot welding is performed is 2.5 µm or less.

3. The method according to Claim 1 or 2, wherein the portion where spot welding is performed is not coated with the coating layer.

4. The method according to any one of Claims 1 to 3, wherein an area of the portion where spot welding is performed is 25% or more of an electrode surface area in spot welding.

## Patentansprüche

1. Verfahren zur Herstellung eines rostfreien Stahlblechs, umfassend die Schritte von:
a) Erhalten von Informationen über eine Position, an der Punktschweißen durchgeführt wird von einem Stahlblechanwender; und
b) Aufbringen einer organischen und/oder anorganischen Beschichtungsschicht unter Verwendung einer Auftragungswalze auf mindestens eine Seite des Stahlblechs, um eine Rostschutzwirkung zu gewährleisten, wobei die Dicke der Beschichtungsschicht in einem Abschnitt des Stahlblechs, in dem eine Punktschweißung durchgeführt wird, geringer ist als in einem Abschnitt, in dem eine Punktschweißung nicht durchgeführt wird, wobei die Auftragungswalze auf ihrer Oberfläche einen vertieften Abschnitt und einen vorstehenden Abschnitt aufweist, wobei die Differenz in der Dicke der Beschichtungsschicht durch einen Höhenunterschied zwischen dem vertieften und dem vorstehenden Abschnitt gesteuert wird;
c) Steuern der Dicke der organischen und/oder anorganischen Beschichtungsschicht in dem Abschnitt, in dem das Punktschweißen durchgeführt wird, auf der Grundlage der in Schritt a) erhaltenen Informationen.

2. Verfahren nach Anspruch 1, worin die Dicke der Beschichtungsschicht in dem Abschnitt, in dem das Punktschweißen durchgeführt wird, 2,5 µm oder weniger beträgt.

3. Verfahren nach Anspruch 1 oder 2, worin der Abschnitt, in dem das Punktschweißen durchgeführt wird, nicht mit der Beschichtungsschicht beschichtet wird.

4. Verfahren nach einem der Ansprüche 1 bis 3, worin ein Bereich des Abschnitts, in dem das Punktschweißen durchgeführt wird, 25% oder mehr einer Elektrodenoberfläche beim Punktschweißen beträgt.

## Revendications

1. Procédé de fabrication d'une tôle d'acier inoxydable, comprenant les étapes consistant à :
a) obtenir des informations concernant une position où le soudage par points est effectué par un utilisateur de tôle d'acier ; et
b) appliquer une couche de revêtement organique et/ou inorganique sur au moins un côté de la tôle d'acier pour donner un caractère inoxydable, dans lequel l'épaisseur de la couche de revêtement dans une partie de la tôle d'acier où un soudage par points est effectué est inférieure à celle d'une partie où un soudage par points n'est pas effectué en utilisant un rouleau d'application, le rouleau d'application ayant sur sa surface une partie évidée et une partie en saillie, dans lequel la différence d'épaisseur de la couche de revêtement est commandée par une différence de hauteur entre la partie évidée et la partie en saillie ;
c) commander l'épaisseur de la couche de revêtement organique et/ou inorganique dans la partie où un soudage par points est effectué, sur la base des informations obtenues à l'étape a).

2. Procédé selon la revendication 1, dans lequel l'épaisseur de la couche de revêtement dans la partie où un soudage par points est effectué est de 2,5 µm ou moins.

3. Procédé selon la revendication 1 ou 2, dans lequel la partie où un soudage par points est effectué n'est pas revêtue de la couche de revêtement.

4. Procédé selon l'une quelconque des revendications 1 à 3, dans lequel une surface de la partie où un soudage par points est effectué est égale à 25 % ou plus d'une surface superficielle d'électrode pour un soudage par points.
